# EUROPEAN PATENT APPLICATION

(11) **EP 4 836 137 A1**
(43) Date of publication of application: **04.11.2026**
(21) Application number: 25198253.4
(22) Date of filing: 26.08.2025
(51) Int. Cl.: H01M 50/244, H01M 50/249, H01M 50/262, H01M 50/242, H01M 50/289

(54) **ASSEMBLY COMPRISING A CONNECTING MEMBER BETWEEN A REINFORCEMENT BEAM AND A FRAME OF A BATTERY HOLDER**

(71) Applicant: Constellium Singen GmbH, 78224 Singen (DE); Constellium UK Limited, Burnham, SL1 8DF (GB)
(72) Inventor: DAVIS, Martin, WITHERLEY, CV9 3LY (GB)
(74) Representative: Constellium - Propriété Industrielle

(57) **Abstract**

The invention concerns an assembly (1) for battery holder (100) comprising a frame member (20), a reinforcing beam (30), and a connecting member (10) configured to ensure a structural connection between the frame member (20) and the reinforcing beam (30); said connecting member (10) comprising a first part (11) configured to be fixed to the frame member (20), and a second part (15), configured to cooperate with the reinforcing beam (30), the second part (15) being rotatably mounted relative to the first part (11), around an axis of rotation (Z).

The invention also concerns a battery holder (100) comprising such an assembly (1), and an assembly method for assembling such an assembly (1).

## Description

### FIELD OF THE INVENTION

This invention relates to the field of electric or hybrid motorized transport vehicle, and more particularly to a battery holder intended to receive all or part of a battery to be supported by the battery holder.

More particularly, the invention relates to a connecting member included in an assembly for such a battery holder.

### BACKGROUND

The state of the art described below presents applications in the field of electric or hybrid vehicles, but it could also relate to other fields or applications requiring the use of a battery holder, also called battery box.

It is known from the state of the art to use a battery enclosure presenting a structural frame designed to support the battery, and eventually to protect the battery cells or modules from damages in the event of impact, or shock and from environmental ingresses. Said battery enclosure generally comprises the following elements:
- a circumferential structural frame usually fastened into the vehicle body structure using a bolting system;
- a floor closing the bottom of the frame and configured to receive all or part of the battery cells or modules;
- a lid made of plastic, steel or aluminum and placed on top of the above structure to seal completely the battery enclosure.

The role of said enclosure is to hold and protect the cells or the modules of the battery. However, depending on the needs, and depending on the type of battery cells or modules intended to be held by the battery holder, the shape for the overall structure of the frame can change drastically. Indeed, the battery system for an electric vehicle is built by a combination of individual cells. Generally, there are three main cell types which can determine the geometry, the size, the range as well as the vulnerability of the energy storage system. Consequently, the type of cells selected will influence the final design and shape of the battery enclosures.

A first main characteristic that a battery enclosure should have is that it needs to be sufficiently robust to reduce the chances of deforming when the vehicle is involved in a miss-use situation or in an accident. For this reason, the battery enclosure must have sufficient strength in order to reduce the chances of damaging internals of the enclosure, which could eventually cause serious damage to the vehicle and its surroundings. To achieve the structural stiffness required, internal parts are used to create a connection between the parts of the structural frame. A typical component that is used in this way is interior beam, also called reinforcing beam. Those interior beams allow housing the battery cells or module, along with increasing the overall mechanical resistance of the battery holder.

The reinforcing beams (interior beams) generally extend from one edge to the opposite edge of the battery enclosure and are generally arranged so that the battery enclosure contains as many battery cells or modules as possible. In the event of an impact, the battery modules may move within the battery enclosure. The interior beams or reinforcing beams must be securely fastened to the frame profiles to withstand the impact and keep the battery enclosure unit intact.

In order to achieve a fastening with good mechanical strength, it is known from the state of the art to use connecting members that secure the reinforcing beam to the frame. These connecting members are also useful for adjusting the length and position of the reinforcing beams. Documents WO2023/32646A1, EP4270616A1, EP4451441A1, US20180138477A1, US20230318106A1, CN108461685A, CN216085131UU illustrate examples of such connecting members.

However, the frame of a battery box may include curved parts. The above mentioned connecting members may then have limitations when used on curved parts of the frame. Indeed, it may be difficult to achieve a robust connection between the frame and the reinforcing beam. Furthermore, on these curved sections, dimensional tolerances for assembly are more difficult to control, which makes assembly of the battery holder more difficult.

Therefore, there is a need to find a solution to connect the reinforcing beams to the frame while ensuring a good mechanical strength, an easy assembly, a good management of geometrical tolerances.

### DISCLOSURE OF THE INVENTION

The present invention aim at solving the aforementioned problems.

To this end, the invention concerns an assembly for battery holder, the battery holder comprising a frame and a floor delimiting between them a housing intended to receive all or part of a battery, the assembly comprising :
- a frame member intended to form at least one part of the frame of the battery holder and extending along a primary direction;
- a reinforcing beam extending along a secondary direction, and forming an non-zero angle with the primary direction
- a connecting member configured to ensure a structural connection between the frame member and the reinforcing beam, said connecting member comprising:
   - a first part configured to be fixed to the frame member; and
   - a second part, configured to cooperate with the reinforcing beam, the second part being rotatably mounted relative to the first part, around an axis of rotation.

The arrangements described above make it possible to provide a connecting member allowing at least one degree of freedom in rotation between the frame member and the reinforcing beam, which simplifies the positioning of the reinforcing beam relative to the frame member, notably when the frame member presents a curved portion, this will also ensure good joining conditions between the connecting member and the frame member.

According to an embodiment, the assembly comprises on or more of the following features, taken alone or in combination.

According to one embodiment, at least one portion of the frame member extends along a primary direction.

According to one embodiment, the frame member is a structural profile. For example, the frame member is an extruded profile.

According to one embodiment, at least one element chosen between the frame member, the reinforcing beam and the connecting member comprises, or is constituted, by aluminum, or by an aluminum alloy.

According to one embodiment, at least one element chosen between the frame member, the reinforcing beam and the connecting member is obtained, at least partially, by extrusion.

According to one embodiment, the axis of rotation is sensibly perpendicular to an extension plan defined by the frame member and the reinforcing beam.

This makes it possible to adjust the position of the reinforcing beam in the extension plan of the battery holder.

Alternatively, the axis of rotation may be sensibly parallel to the extension plan defined by the frame member and the reinforcing beam.

According to one embodiment, the first part of the connecting member comprises on the one hand a mounting plate and on the other hand a first connection portion, the mounting plate being configured to be fixed to the frame member, and the first connection portion being configured to cooperate by rotation with the second part, around the axis of rotation.

Thus, the mounting plate can be adapted to fit with a fixing surface of the frame member, and the first connection portion can be adapted to form a pivot link or a sliding pivot joint with the second part of the connecting member

According to one embodiment, the mounting plate is configured to be welded to the frame member.

For example the mounting plate presents a thickness that is at least 10 times, and preferably 100 times, smaller than a length or a width of said mounting plate.

According to one embodiment, the mounting plate presents at least a part, which is curved.

Thus, the connecting member is adapted to connect a curved portion of the frame member, which presents generally a curved fixing surface, with the reinforcing beam.

According to one embodiment, the first connection portion comprises a cylindrical body, configured to form an axis of a hinge between the first part and the second part of the connecting member.

According to one embodiment, the first part comprises at least one protrusion, protruding from the mounting plate, on the opposite side compared to the first connection portion, said at least one protrusion is configured to be fixedly attached to the frame member, for example by welding.

In this way, it is possible to provide a robust fixing of the mounting plate with the frame member, while limiting the contact surface between the mounting plate and the frame member, which allows managing the possible dimensional tolerances.

According to one embodiment, the second part comprises on the one hand a second connection portion configured to cooperate by rotation with the first part, around the axis of rotation, and on the other hand an insertion node configured to be inserted inside a cooperation cavity of the reinforcing beam.

Thus, the second connection portion may have a shape adapted to form a hinge with the first part of the connecting member, and the insertion node may have a shape adapted to allow a dimensional adjustment of the connecting member with the reinforcing beam.

According to one embodiment, the second connection portion presents a cooperation surface that is complementary to the first connection portion.

According to one embodiment, the second part comprises at least one holding fin, intended to cooperate by clipping with the reinforcing beam.

The at least one holding fin allows to facilitate the cooperation between the connecting member and the reinforcing beam.

For example, the second part comprises two holding fins extending from the second part towards the reinforcing beam.

According to one embodiment, the at least one holding fin is configured to be clipped with the reinforcing beam from the exterior of the reinforcing beam.

Alternatively, the at least one holding fin is configured to be clipped with the reinforcing beam from the interior of the reinforcing beam.

According to one embodiment, the reinforcing beam comprises at least one adjustment opening, said adjustment opening presenting an adjustment length along which the second part of the connecting member is configured to cooperate by sliding.

Thus, it is possible to adjust the relative position between the connecting member and the reinforcing beam.

Generally, the second part of the connecting member is configured to cooperate by sliding along the secondary direction.

According to one embodiment, the adjustment opening presents an adjustment length large enough to allow a welding of the second part with the reinforcing beam.

According to one embodiment, the assembly comprises a locking element configured to block the rotation between the first part and the second part, around the axis of rotation

Thus, the connecting member is adapted to fix the relative position of the reinforcing beam and the frame member, when the frame of the battery holder is assembled. It is thus easier to manage the dimensional tolerances over the entire frame.

For example, the locking element comprises a adhesive and /or a screw, and/or a weld.

According to one embodiment, the assembly comprises further at least one blocking element configured to vary between a liberation configuration wherein the connecting member and the reinforcing beam can slide relative to one another, and a blocking configuration wherein the blocking element blocks the sliding between the connecting member and the reinforcing beam.

In this way, the at least one blocking element allows an adjustment of the position of the reinforcing beam compared to the connecting member and is able to block the relative position of the reinforcing beam and the connecting member when the reinforcing beam is correctly placed in the battery holder.

For example, the at least one blocking element comprises a adhesive and/or a screw, and/or a weld.

The object of the invention may also be achieved by implementing a battery holder for a transport vehicle, the battery holder comprising a frame and a floor delimiting between them a housing intended to receive all or part of a battery, said frame comprising at least one assembly as described previously.

According to one embodiment, the battery holder is adapted to be included in an electric or hybrid motorized transport vehicle.

The object of the invention may also be achieved by implementing an assembly method for assembling a fixed assembly for battery holder, the assembly method comprising the following steps:
- providing an assembly as described above, wherein the reinforcing beam is rotatably mounted relative to the frame member via the connecting member, and wherein the first part of the connecting member is fixed with the frame member;
- blocking the rotation between the first part and the second part of the connecting member, in order to fix the relative position between the frame member and the reinforcing beam;
- fixing the second part of the connecting member with the reinforcing beam.

The above described assembly method allows to keep at least one degree of freedom between the reinforcing beam and the frame member before the blocking step. It allows to manage the dimensional tolerance when assembling the battery holder, and especially the angle variations that could occur between the structural element and the reinforcing beam at the level of the curved portion of the frame of the battery holder.

According to an embodiment, the assembly method comprises one or more of the following features, taken alone or in combination.

According to one embodiment, the step of providing the assembly comprises the following successive steps:
- providing a frame member, a reinforcing beam and a connecting member;
- forming an intermediate assembly by assembling the connecting member with the reinforcing beam, the second part of the connecting member cooperating with the reinforcing beam;
- fixing the first part of the connecting member of the intermediate assembly with the frame member.

Thus, it is possible to form an intermediate assembly comprising only the reinforcing member and the connecting member, which can be used directly to fix the reinforcing beam to the frame member. The fixing step is thus more convenient to implement.

According to one embodiment, the step of providing the assembly comprises the following successive steps:
- providing a frame member, a reinforcing beam and a connecting member;
- forming an intermediate assembly by fixing the first part of the connecting member with the frame member;
- assembling the second part of connecting member of the intermediate assembly with the reinforcing beam.

Thus, it is possible to form an intermediate assembly comprising only the frame member and the connecting member, which can be used directly to fix the reinforcing beam to the frame member. The fixing step is thus more convenient to implement.

### BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which the same reference refer to similar elements or to elements having similar functions, and in which:
Figure 1 represents an exploded view of a battery holder adapted to house an assembly according to the invention.
Figure 2 represents a top view of an assembly according to the invention
Figure 3 represents a perspective view of a first variant of an assembly according to one embodiment of the invention when the position is blocked.
Figures 4a to 4d represent a perspective view of two others variant of an assembly according to one embodiment of the invention, Fig. 4a and 4c before the position is blocked and Fig. 4b and 4d after.
Figure 5 represents a perspective view of a third variant of a connecting member for an assembly according to one embodiment of the invention.
Figure 6 represents a top view of the connecting member of figure 5.

### DETAILED DESCRIPTION

In the figures and in the remainder of the description, the same references represent identical or similar elements. In addition, the various elements are not represented to scale so as to favor the clarity of the figures. Furthermore, the different embodiments and variants are not mutually exclusive and can be combined with one another.

As illustrated on the figures, the invention concerns an assembly 1 for battery holder 100. The invention also concerns a battery holder 100 for a transport vehicle comprising such an assembly 1. Said battery holder 100 is advantageously adapted to be included in an electric or hybrid motorized transport vehicle.

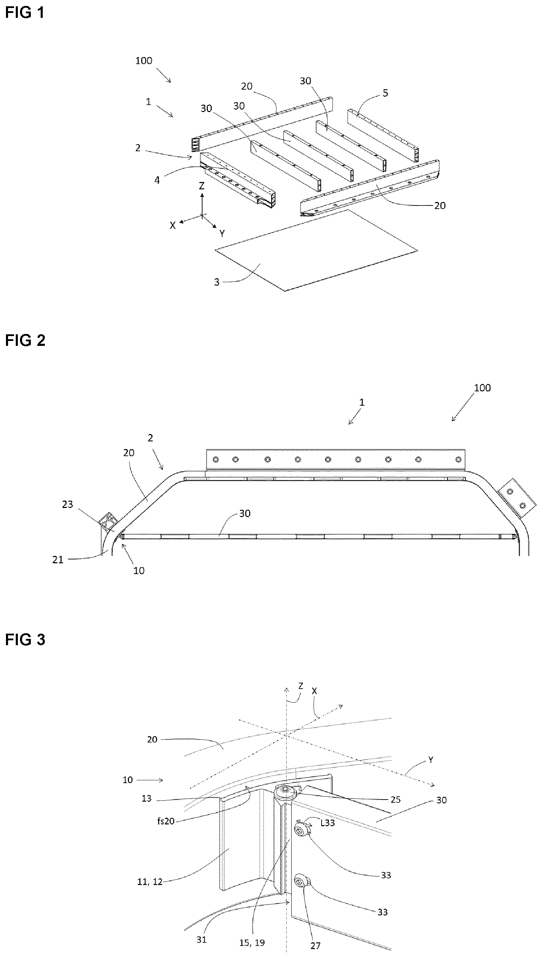

As illustrated on figure 1, the battery holder 100 comprises a frame 2 and a floor 3 delimiting between them a housing intended to receive all or part of a battery. The battery intended to be held by the battery holder 100 may be any type of battery, comprising for example: cylindrical cells, prismatic cells, pouch cells and/or battery modules.

The battery holder 100 comprises generally a lid (not represented), and connected to the frame 3 so as to close the housing. The non-limiting embodiment represented on figure 1 illustrates a battery holder 100 wherein the frame 2 comprises two lateral frame members 20 extending along a primary direction corresponding, in that case, to the direction named "X" in which the electrical vehicle travels. According to this embodiment, the frame 2 comprises further, a front profile 4, and a back profile 5. In this example, the frame 2 has a general quadrilateral shape. However, such shape is non-limiting, and the frame 2 may have any other shape.

Indeed, and as illustrated on figure 2, the frame 2 may comprise frame members 20 extending along a primary trajectory, which is not exclusively rectilinear. For example, the frame member 20 may comprise at least one rectilinear portion 21, and at least one curved portion 23.

Although this is not limiting, it is possible the frame member 20 is a structural profile of the battery holder, and for example that the frame member 20 is an extruded profile. Therefore, the manufacturing of the frame member 20 is cost effective.

The assembly 1 comprises further at least one reinforcing beam 30 extending along a secondary direction, which forms a non-zero angle with the primary trajectory. The reinforcing beam 30 is disposed inside the frame 2, and is generally connected, via a connecting member 10, to frame members 20.

In the variant represented on figure 1, the secondary direction is sensibly perpendicular to the primary direction. In this way, it is possible that the secondary direction is a transversal direction noted "Y", for example corresponding to a direction perpendicular to the direction X in which the electrical vehicle travels.

In the variant represented on figures 2 to 4, the secondary direction corresponds to a direction Y perpendicular to the direction X in which the electrical vehicle travels, but the reinforcing beam 30 is connected to a curved portion 23 of the frame member 20. It is also possible that the primary direction is oriented perpendicular to the direction X in which the electrical vehicle travels, and that the reinforcing beam 30 is extending along the direction in which the electrical vehicle travels.

As indicated before, the assembly 1 comprises further the connecting member 10, which is configured to ensure a structural connection between the frame member 20 and the reinforcing beam 30. In order to facilitate the manufacturing of the assembly 1, at least one element chosen between the frame member 20, the reinforcing beam 30 and the connecting member 10 may be obtained, at least partially, by extrusion. Besides, in order to reduce the total weight of the battery holder 100, at least one element chosen between the frame member 20, the reinforcing beam 30 and the connecting member 10 may comprise, or be constituted, by aluminum, or by an aluminum alloy.

Figures 3 to 4 illustrates different embodiments of the connecting member 10. The connecting member 10 comprises first, a first part 11 configured to be fixed to the frame member 20, and a second part 15, configured to cooperate with the reinforcing beam 30. The second part 15 is rotatably mounted relative to the first part 11, around an axis of rotation noted "Z". Advantageously, the axis of rotation Z may be sensibly perpendicular to an extension plan defined by the frame member 20 and the reinforcing beam 30. This makes it possible to adjust the position of the reinforcing beam 30 in the extension plan of the battery holder 100.

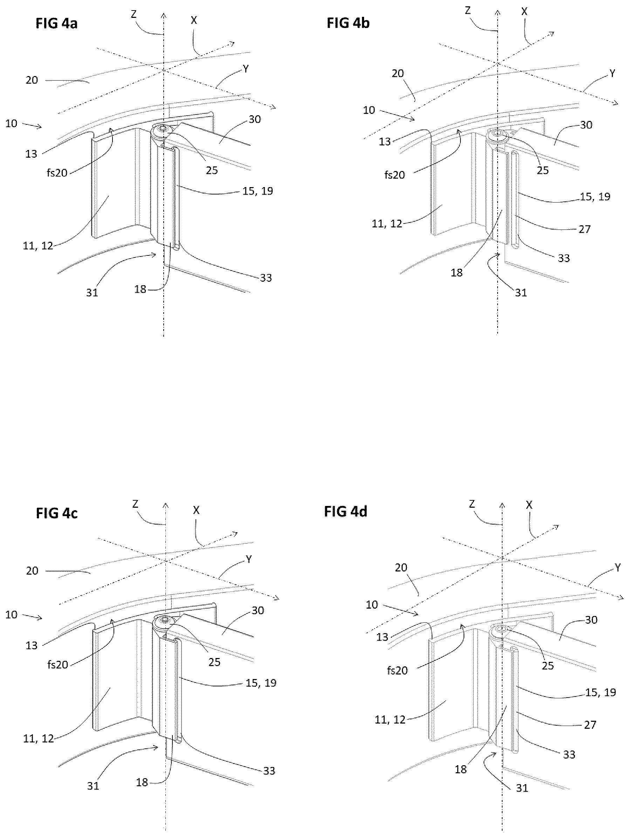

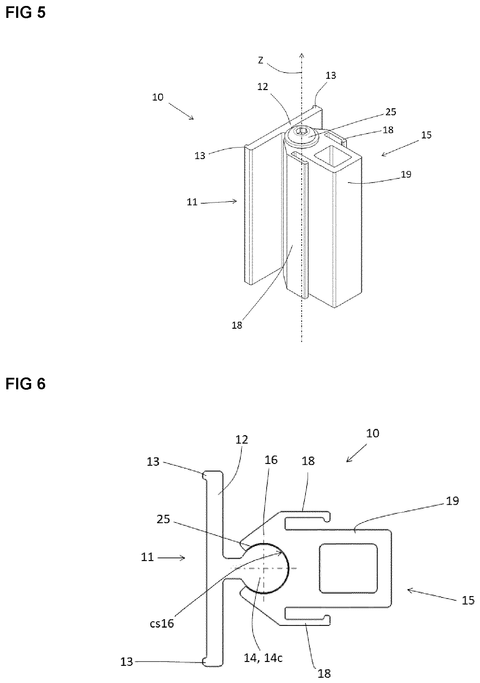

Generally, the connecting member 10 comprises on the one hand a mounting plate 12, and on the other hand a first connection portion 14. By "plate", it is generally meant that the mounting plate 12 presents a thickness that is at least 10 times, and preferably 100 times, smaller than a length or a width of said mounting plate 12. The mounting plate 12 can be adapted to fit with a fixing surface fs20 of the frame member 20. Thus, as illustrated on figures 5 or 6, if the fixing surface fs20 is flat (meaning that the frame member as a rectilinear portion at the level of the fixing surface fs20), then the mounting plate 12 can be flat. Alternatively, as illustrated on figures 3 and 4, the mounting plate 12 can be curved, to fit with the curved fixing surface fs20. The mounting plate 12 may thus present at least a part, which is curved. Finally, it is also possible that the mounting plate 12 comprises both a flat portion and a curved portion, to be adapted to fit a frame member 20 at a portion disposed between a rectilinear portion 21 and a curved portion 23 of the frame member 20.

The mounting plate 12 is configured to be fixed to the frame member 20, for example by welding. To this end, the first part 11, and notably the mounting plate 12 may be provided with at least one protrusion 13, protruding from a main body of the mounting plate 12, on the opposite side compared to the first connection portion 14. Said at least one protrusion 13 may be configured to be fixedly attached to the frame member 20, for example by welding. In this way, it is possible to provide a robust fixing of the mounting plate 12 with the frame member 20, while limiting the contact surface between the mounting plate 12 and the frame member 20, which allows managing the possible dimensional tolerances.

The first connection portion 14 of the first part 11 may be configured to cooperate by rotation with the second part 15, around the axis of rotation Z. For example, the first connection portion 14 can be adapted to form a pivot link or a sliding pivot joint with the second part 15 of the connecting member 10. To this end, it is possible that the first connection portion 14 comprises a cylindrical body 14c, configured to form an axis of a hinge between the first part 11 and the second part 15 of the connecting member 10.

The second part 15 of the connecting member 11 is configured to cooperate with the reinforcing beam 30, the second part 15 being rotatably mounted relative to the first part 11, around an axis of rotation Z.

As illustrated in the figures 3 to 6, the second part 15 may comprise on the one hand a second connection portion 16 configured to cooperate by rotation with the first part 11, around the axis of rotation Z, and on the other hand an insertion node 19 configured to be inserted inside a cooperation cavity 31 of the reinforcing beam 30. Thus, the second connection portion 16 may have a shape adapted to form a hinge with the first part 11 of the connecting member 10, and the insertion node 19 may have a shape adapted to allow a dimensional adjustment of the connecting member 10 with the reinforcing beam 30. For example, the second connection portion 16 may present a cooperation surface cs16 that is complementary to the first connection portion 14.

Figures 4 to 6 represents embodiments of the connecting member 10, wherein the second part 15 comprises at least one holding fin 18, intended to cooperate by clipping with the reinforcing beam 30. For example, the second part 15 comprises two holding fins 18 extending from the second part 15 towards the reinforcing beam 30 along a lateral plan. In other words, the lateral plan along which the holding fins expend may be defined by the secondary direction and the axis of rotation Z. Said holding fins 18 may be configured to be clipped with the reinforcing beam 30 from the exterior of the reinforcing beam 30. Alternatively, the at least one holding fin 18 is configured to be clipped with the reinforcing beam 30 from the interior of the reinforcing beam 30 (not represented), and notably from the cooperation cavity 31. The at least one holding fin 18 allows to facilitate the cooperation between the connecting member 10 and the reinforcing beam 30.

Referring to figures 3 and 4, the reinforcing beam 30 may comprise at least one adjustment opening 33, which presents an adjustment length L33 along which the second part 15 of the connecting member 10 is configured to cooperate by sliding. Figure 3 illustrate a first variant wherein the reinforcing beam 30 comprises two adjustment openings 33 extending along the secondary direction. Figures 4 illustrate a second variant wherein the reinforcing beam 30 comprises one adjustment opening 33 extending along the axis of rotation Z. In both variants, the adjustment length L33 is counted along the secondary direction, along which the sliding between the connecting member 10 and the reinforcing beam 30 is possible. Thus, it is possible to adjust the relative position between the connecting member 10 and the reinforcing beam 30. However, depending on the shape of the adjustment opening 33, a slight adjustment along the axis of rotation Z may also be possible. Advantageously, the adjustment opening 33 may present an adjustment length L33 large enough to allow a welding of the second part 15 with the reinforcing beam 30.

The connecting member 10 may further comprise a locking element 25 configured to block the rotation between the first part 11 and the second part 15, around the axis of rotation Z. For example, the locking element 25 comprises an adhesive, and/or a screw, and/or a weld. Thus, the connecting member 10 is adapted to fix the relative position of the reinforcing beam 30 and the frame member 20, when the frame 2 of the battery holder 100 is assembled. It is thus easier to manage the dimensional tolerances over the entire frame 2.

Besides, the connecting member 10 may comprise at least one blocking element 27 configured to vary between a liberation configuration wherein the connecting member 10 and the reinforcing beam 30 can slide relative to one another, and a blocking configuration wherein the blocking element 27 blocks the sliding between the connecting member 10 and the reinforcing beam 30. Figure 3 illustrates a variant wherein the at least one blocking element 27 comprises two screws configured to be screwed inside threaded holes provided in the second part 15 of the connecting member 10, a head of each screw being adapted to abut on both side of the corresponding adjustment opening 33. Figure 4b and 4d represent another variant wherein the at least one blocking element 27 is a weld. In figure 4b, the weld is placed in the adjustment opening 33, between the insertion node 19 and the reinforcing beam 30, whereas in figure 4d, the weld is placed in the adjustment opening 33, between the holding fin 18, the insertion node 19 and the reinforcing beam 30.

In this way, the at least one blocking element 27 allows an adjustment of the position of the reinforcing beam 30 compared to the connecting member 10 and is able to block the relative position of the reinforcing beam 30 and the connecting member 10 when the reinforcing beam 30 is correctly placed in the battery holder 100.

All of the provisions described above make it possible to provide a connecting member 10 allowing at least one degree of freedom in rotation between the frame member 20 and the reinforcing beam 30, which simplifies the positioning of the reinforcing beam 30 relative to the frame member 20, notably when the frame member 20 presents a curved portion 23.

The invention also concerns an assembly method for assembling a fixed assembly for battery holder 100. The assembly method comprises the following steps.

A step of providing an assembly 1 as described above, wherein the reinforcing beam 30 is rotatably mounted relative to the frame member 20 via the connecting member 10, and wherein the first part 11 of the connecting member 10 is fixed with the frame member 20. To this end, the step of providing the assembly 1 may comprise the following steps: A step of providing a frame member 20, a reinforcing beam 30 and a connecting member 10, followed by a step of forming an intermediate assembly.

According to a first variant, the step of forming an intermediate assembly may comprise cooperating the connecting member 10 with the reinforcing beam 30. In that case, the second part 15 of the connecting member 10 cooperates with the reinforcing beam 30. According to this variant, a step of fixing the first part 11 with the frame member 20 may then be implemented. Thus, it is possible to form an intermediate assembly comprising only the reinforcing member 30 and the connecting member 10, which can be used directly to fix the reinforcing beam 30 to the frame member 20. The fixing step is thus more convenient to implement.

According to a second variant, the step of forming an intermediate assembly may comprise fixing the first part 11 of the connecting member 10 with the frame member 20. According to this variant, a step of assembling the second part 15 with the reinforcing beam 30 may then be implemented. Thus, it is possible to form an intermediate assembly comprising only the frame member 20 and the connecting member 10, which can be used directly to assemble the reinforcing beam 30 to the frame member 20. The fixing step is thus more convenient to implement.

According to a third variant, assembling the first part 11 of the connecting member 10 with the frame member 20, and the second part 15 of the connecting member 10 with the reinforcing beam 30 can be performed simultaneously.

Then, the assembly method comprises a step of blocking the rotation, around the axis of rotation Z, between the first part 11 and the second part 15 of the connecting member 10, in order to fix the relative position between the frame member 20 and the reinforcing beam 30.

The above described assembly method allows to keep at least one degree of freedom between the reinforcing beam 30 and the frame member 20 before the blocking step. It allows managing the dimensional tolerance when assembling the battery holder 100, and especially the angle variations that could occur between the structural element and the reinforcing beam 30 at the level of the curved portion 23 of the frame 2 of the battery holder 100.

Finally, the assembly method comprises a step of fixing the second part 15 of the connecting member 10 with the reinforcing beam 30. Thus, it is possible to form a fixed assembly, once the reinforcing beam 30 and the frame member 20 are correctly positioned.

## Claims

1. Assembly (1) for battery holder (100), the battery holder (100) comprising a frame (2) and a floor (3) delimiting between them a housing intended to receive all or part of a battery, the assembly (1) comprising :
- a frame member (20) intended to form at least one part of the frame (2) of the battery holder (100) and extending along a primary direction;
- a reinforcing beam (30) extending along a secondary direction, and forming an non-zero angle with the primary direction;
- a connecting member (10) configured to ensure a structural connection between the frame member (20) and the reinforcing beam (30), said connecting member (10) comprising:
• a first part (11) configured to be fixed to the frame member (20); and
• a second part (15), configured to cooperate with the reinforcing beam (30), the second part (15) being rotatably mounted relative to the first part (11), around an axis of rotation (Z).

2. Assembly (1) according to claim 1, wherein the axis of rotation (Z) is sensibly perpendicular to a plan defined by the frame member (20) and the reinforcing beam (30).

3. Assembly (1) according to any one of claims 1 or 2, wherein the first part (11) of the connecting member (10) comprises on the one hand a mounting plate (12) and on the other hand a first connection portion (14), the mounting plate (12) being configured to be fixed to the frame member (20), and the first connection portion (14) being configured to cooperate by rotation with the second part (15), around the axis of rotation (Z).

4. Assembly (1) according to claim 3, wherein the mounting plate (12) presents at least a part, which is curved.

5. Assembly (1) according to any one of claims 3 or 4, wherein the first part (11) comprises at least one protrusion (13), protruding from the mounting plate (12), on the opposite side compared to the first connection portion (14), said at least one protrusion (13) is configured to be fixedly attached to the frame member (20), for example by welding.

6. Assembly (1) according to any one of claims 1 to 5, wherein the second part (15) comprises on the one hand a second connection portion (16) configured to cooperate by rotation with the first part (11), around the axis of rotation (Z), and on the other hand an insertion node (19) configured to be inserted inside a cooperation cavity (31) of the reinforcing beam (30).

7. Assembly (1) according to any one of claims 1 to 6, wherein the second part (15) comprises at least one holding fin (18), intended to cooperate by clipping with the reinforcing beam (30).

8. Assembly (1) according to any one of claims 1 to 7, wherein the reinforcing beam (30) comprises at least one adjustment opening (33), said adjustment opening (33) presenting an adjustment length (L33) along which the second part (15) of the connecting member (10) is configured to cooperate by sliding.

9. Assembly (1) according to any one of claims 1 to 8, comprising a locking element (25) configured to block the rotation between the first part (11) and the second part (15), around the axis of rotation (Z)

10. Assembly (1) according to any one of claims 1 to 9, comprising further at least one blocking element (27) configured to vary between a liberation configuration wherein the connecting member (10) and the reinforcing beam (30) can slide relative to one another, and a blocking configuration wherein the blocking element (27) blocks the sliding between the connecting member (10) and the reinforcing beam (30).

11. Battery holder (100) for a transport vehicle, the battery holder (100) comprising a frame (2) and a floor (3) delimiting between them a housing intended to receive all or part of a battery, said frame (2) comprising at least one assembly (1) according to any one of claims 1 to 10.

12. Assembly method for assembling a fixed assembly for battery holder (100), the assembly method comprising the following steps:
- providing an assembly (1) according to any one of claims 1 to 10, wherein the reinforcing beam (30) is rotatably mounted relative to the frame member (20) via the connecting member (10), and wherein the first part (11) of the connecting member (10) is fixed with the frame member (20);
- blocking the rotation between the first part (11) and the second part (15) of the connecting member (10), in order to fix the relative position between the frame member (20) and the reinforcing beam (30);
- fixing the second part (15) of the connecting member (10) with the reinforcing beam (30).

13. Assembly method according to claim 12, wherein the step of providing the assembly (1) comprises the following successive steps:
- providing a frame member (20), a reinforcing beam (30) and a connecting member (10);
- forming an intermediate assembly by assembling the connecting member (10) with the reinforcing beam (30), the second part (15) of the connecting member (10) cooperating with the reinforcing beam (30);
- fixing the first part (11) of the connecting member (10) of the intermediate assembly with the frame member (20).

14. Assembly method according to claim 12, wherein the step of providing the assembly (1) comprises the following successive steps:
- providing a frame member (20), a reinforcing beam (30) and a connecting member (10);
- forming an intermediate assembly by fixing the first part (11) of the connecting member (10) with the frame member (20);
- assembling the second part (15) of connecting member (10) of the intermediate assembly with the reinforcing beam (30).
